# EUROPÄISCHE PATENTSCHRIFT

(11) **EP 1 134 005 B1**
(45) Veröffentlichungstag und Bekanntmachung des Hinweises auf die Patenterteilung: **19.06.2002**
(21) Anmeldenummer: 00810215.4
(22) Anmeldetag: 14.03.2000
(51) Int. Cl.: A63B 9/00, E04B 1/19, A47B 47/00, E04B 1/58

(54) **Klemmverbindung für ein Traggerüst zu Spielzwecken**
Clamping connnector for a game support structure
Dispositif de serrage pour structure de support ludique

(43) Veröffentlichungstag der Anmeldung: 19.09.2001
(73) Patentinhaber: PALIMONDIAL S.A., 2015 Luxembourg (LU)
(72) Erfinder: Larws Peter, 7304 Maienfeld (CH)
(74) Vertreter: Aue, Hans-Peter, Dipl-Ing.

(56) Entgegenhaltungen:
- FR-A- 1 039 734
- NL-C- 1 009 027
- US-A- 5 177 926
- US-A- 5 956 917

## Beschreibung

Die Erfindung bezieht sich auf ein Klettergerüst mit Stäben und Verbindungsknoten, wobei die Stäbe als Rohre ausgebildet und die Verbindungsknoten mit Zapfen versehen sind, zu Spielzwecken, die mittels einer leicht zu handhabenden Klemmverbindung miteinander verbunden werden.

Aus der CH-A- 613741 und der DE 28 06 764 A1 sind Klettergerüste für Kinder bekannt, die aus Verbindungsknoten mit Steckzapfen bestehen, auf welche Rohre aus Kunststoff aufgesteckt werden. Hierbei werden unterschiedliche Sicherungsverfahren angewendet, damit die Rohre sich nicht von den Steckzapfen lösen.

Nachteilig ist bei diesem Aufbau, dass die Verbindung zwischen dem Verbindungszapfen und dem Rohr nicht passgenau und somit formschlüssig ist, sondern auf Grund der Fertigungstoleranzen eher locker ist. Dadurch sind derartig zusammengebaute Klettergerüste nicht sehr spielstabil. Es ist deshalb zumeist notwendig, durch zusätzlichen Einbau von abstützenden Wandelementen die Gerüste zu stabilisieren.

Nachteilig ist außerdem bei diesen Systemen, dass einzelne Rohre aus einem fertigen Gerüst nicht entfernt werden können, da dies die herausragenden Zapfen aus den Verbindungsknoten verhindern. Große Anteile eines fertigen Gerüstes müssen in einem solchen Fall demontiert werden, um Änderungen am Gerüst vorzunehmen.

Es ist Aufgabe der Erfindung, ein Klettergerüst der eingangs genannten Art zu schaffen, welches durch die Verbindungstechnik der Teile untereinander bereits so spielstabil ist, dass es keinerlei Verstärkungen durch Wandelemente bedarf und die Möglichkeit besteht, einzelne Rohre aus einem bestehenden Klettergerüst leicht zu entnehmen, ohne große Teile des Klettergerüstes zu demontieren.

Erfindungsgemäß wird die Aufgabe dadurch gelöst. dass die Zapfen hinterschnitten sind und dass auch die Rohre an den Enden mit hinterschnittenen Zapfen versehen sind, welche Zapfen mittels Kupplungen formschlüssig miteinander verbunden sind. Somit können nach Demontage der Verbindungselemente diese aus einem fertigen Gerüst entnommen werden.

Alternativ wird die Aufgabe auch dadurch gelöst, die Stäbe längs zweigeteilt sind und an den Enden jeweils eine Aufnahme mit Nuten für einen hinterschnittenen Zapfen aufweisen, welchen sie formschlüssig aufnehmen, dass auch die Verbindungsknoten zweigeteilt sind und hinterschnittene Zapfen aufnehmen.

Die Unteransprüche haben vorteilhafte Weiterbildungen der Erfindung zum Gegenstand

Der der Erfindung zu Grunde liegende Gedanke wird nachfolgend anhand von Ausführungsbeispielen, die in den Zeichnungen dargestellt sind, näher beschrieben.
- Fig 1:: zeigt eine perspektivische Draufsicht einer erfindungsgemäßen Klemmverbindung zwischen Teilen eines Klettergerüstes und
- Fig.2.: zeigt eine perspektivische Draufsicht einer weiteren Ausbildung des erfindungsgemäßen Klettergerüstes mit einer Klemmverbindung, bei der das Rohr durch zwei Stabhälften ersetzt ist und diese dann selbst die Funktion der Koppelung zwischen zwei Verbindungsknoten übernehmen.

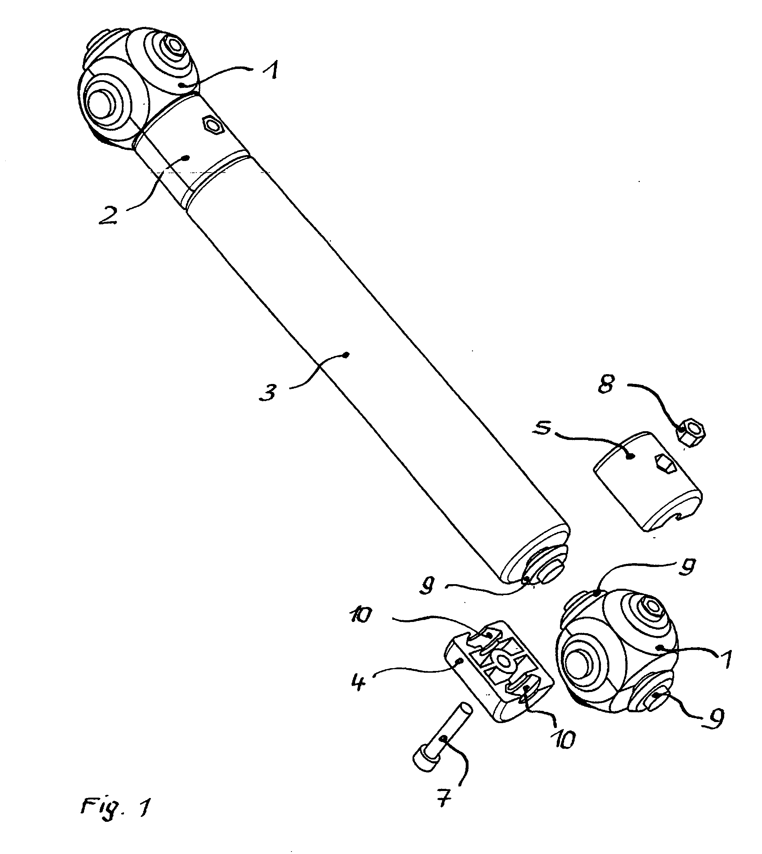

Fig. 1 zeigt die Teile eines Klettergerüstes bestehend aus dem Rohr 3 mit Zapfen 9 und zwei Verbindungsknoten 1, welche durch Kupplungen 2 verbindbar sind. Die Kupplung 2 besteht aus den beiden Kupplungshälften 4 und 5 und hat umlaufende Nuten 10, welche korrespondierende Zapfen 9 umklammern und somit eine formschlüssige Verbindung zwischen den Verbindungsknoten 1 und dem Rohr 3 herstellen. Die Kupplungshälften 4 und 5 werden durch eine Schraube 7 und eine Mutter 8 miteinander verbunden. Aber auch andere wirksame Verbindungstechniken für das miteinander verbinden der Kupplungshälften 4 und 5 sind möglich.

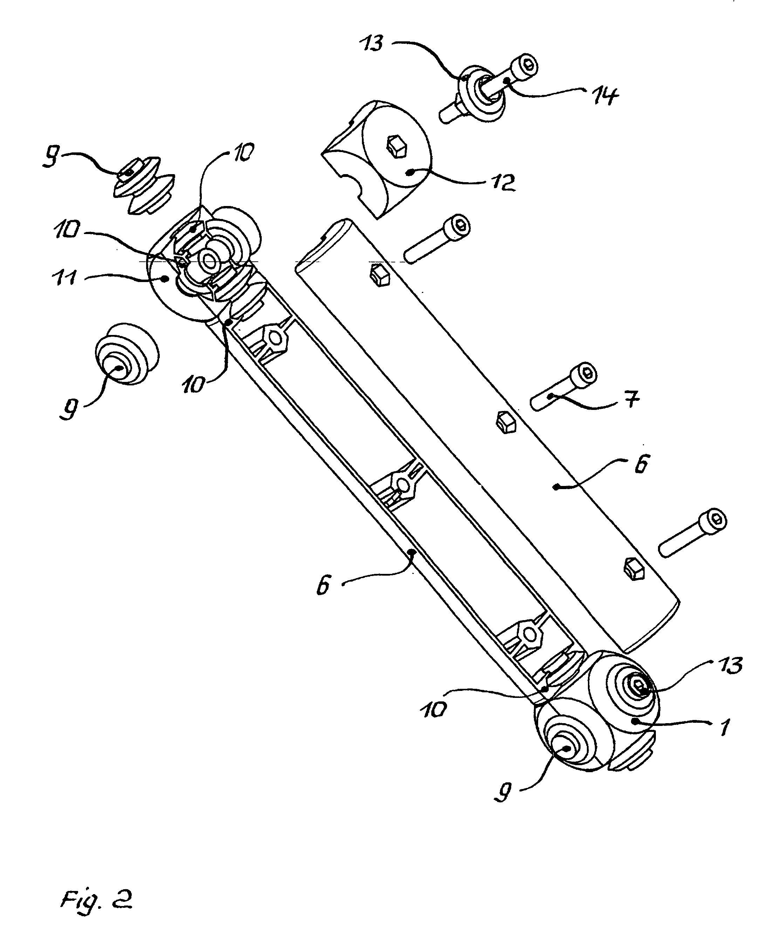

Fig. 2 zeigt die Teile eines Klettergerüstes bestehend aus einem Stab 6, der längs zweigeteilt ist mit umlaufenden Nuten 10 und zwei Verbindungsknoten 1 mit Zapfen 9. Jeder Verbindungsknoten 1 besteht aus zwei Verbindungsknotenhälften 11 und 12 und habt gleichfalls umlaufende Nuten 10, welche die korrespondierenden Zapfen 9 umklammern. Die Verbindungsknotenhälften 11 und 12 des Verbindungsknoten 1 können durch Schraube 7 und Mutter 8 verbunden werden. Wird die etwas längere Spezialschraube 14 zum Verbinden der Verbindungsknotenhälften 11 und 12 verwendet, kann gleichzeitig noch ein Spezialzapfen 13 zwecks einer Verbindung in der dritten Achse befestigt werden.

Liste der Bezugszeichen
- 1: Verbindungsknoten
- 2: Kupplung
- 3: Rohr
- 4: Kupplungshälfte
- 5: Kupplungshälfte
- 6: Stab
- 7: Schraube
- 8: Mutter
- 9: Zapfen
- 10: Nut
- 11: Verbindungsknotenhälfte
- 12: Verbindungsknotenhälfte
- 13: Spezialzapfen
- 14: Spezialschraube

## Patentansprüche

1. Klettergerüst mit Stäben und Verbindungsknoten, wobei die Stäbe als Rohre (3) ausgebildet und die Verbindungsknoten (1) mit Zapfen (9) versehen sind, **dadurch gekennzeichnet, dass** die Zapfen (9) hinterschnitten sind und dass auch die Rohre (3) an den Enden mit hinterschnittenen Zapfen (9) versehen sind, welche Zapfen (9) mittels Kupplungen (2) formschlüssig miteinander verbunden sind.

2. Klettergerüst nach Anspruch 1, **dadurch gekennzeichnet, dass** die Kupplung (2) aus Kupplungshälften (4, 5) besteht, welche mittels Verbindungsschraube (7) und Mutter (8) miteinander verbindbar sind.

3. Klettergerüst nach den Ansprüchen 1 und 2, **dadurch gekennzeichnet, dass** die beiden Kupplungshälften (4, 5) beidseitig eine umlaufende Nut (10) aufweisen, welche die Zapfen (9) vom Verbindungsknoten (1) und vom Rohr (3) formschlüssig verbinden.

4. Klettergerüst mit Stäben und Verbindungsknoten, **dadurch gekennzeichnet, dass** die Stäbe (6) längs zweigeteilt sind und an den Enden jeweils eine Aufnahme mit Nuten (10) für einen hinterschnittenen Zapfen (9) aufweisen, welchen sie formschlüssig aufnehmen, dass auch die Verbindungsknoten (1) zweigeteilt sind und hinterschnittene Zapfen (9) aufnehmen.

5. Klettergerüst nach Anspruch 4, **dadurch gekennzeichnet, dass** die Hälften (11, 12) der Stäbe (6) mittels Schrauben (7) und Muttern verbindbar sind und dabei gleichzeitig die hinterschnittenen Zapfen (9) der Verbindungsknoten (1) formschlüssig umschließen.

6. Klettergerüst nach einem der Ansprüche 1 bis 5, **dadurch gekennzeichnet, dass** der aus zwei Verbindungsknotenhälften (11, 12) bestehende Verbindungsknoten (1) Nuten (10) aufweist, in die Zapfen (9) einlegbar sind, und die Verbindungsknotenhälften (11, 12) miteinander verschraubbar und somit die Zapfen (9) formschlüssig im Verbindungsknoten (1) festgeklemmt sind.

7. Klettergerüst nach einem der Ansprüche 1 - 6, **dadurch gekennzeichnet, dass** ein Spezialzapfen (13) mittels einer längeren Spezialschraube (14) zusätzlich mit dem Verbindungsknoten (1) verschraubbar ist.

8. Klettergerüst für Kinder nach Anspruch 7, **dadurch gekennzeichnet, dass** der Spezialzapfen (13) mittels der Spezialschraube (14) auch am Stab (6) anbringbar ist.

9. Klettergerüst nach einem der Ansprüche 4 - 8, **dadurch gekennzeichnet, dass** die miteinander verbundenen Stäbe (6) mindestens an einem Ende einen Zapfen (9) aufweisen, der in der Nut (10) der miteinander verbundenen Verbindungsknotenhälften (11, 12) formschlüssig festklemmbar ist.

10. Klettergerüst nach einem der Ansprüche 1 - 9, **dadurch gekennzeichnet, dass** die Verbindungsknoten (1), die Kupplungshälften (4, 5), die Rohre (3), die Stäbe (6) und die Zapfen (9) und die Spezialzapfen (13) teilweise aus Kunststoff bestehen.

## Claims

1. Climbing structure with bars and connection nodes, the bars being formed as tubes (3) and the connection nodes being provided with pins (9), **characterized in that** the pins are undercut and that the tubes (3) are provided at the ends with undercut pins (9) which pins (9) are connected to each other by means of blocking secured couplings (2).

2. Climbing structure according to claim 1, **characterized in that** the coupling (2) comprises coupling halves (4, 5) which are connectable to each other by means of connecting screws (7) and nuts.

3. Climbing structure according to claims 1 and 2, **characterized in that** the both coupling halves (4, 5) comprise on both sides a circonferential groove, which coupling halves connect blocking secured the pins (9) of the connection nodes (1) and of the tube (3) to each other.

4. Climbing structure with bars and connection nodes, **characterized in that** the bars (6) are longitudinally separated in two parts and comprise respectively at the ends a receiver with grooves (10) for an undercut pin (9) which they receive blocking secured and that also the connection nodes (1) are separated in two parts and receive undercut pins (9).

5. Climbing structure according to claim 4, **characterized in that** the halves (11, 12) of the bars (6) are connectable by means of screws (7) and nuts and surround blocking secured at the same time the undercut pins (9) of the connection nodes (1).

6. Climbing structure according to one of the claims 1 to 5, **characterized in that** the connection nodes (1) composed of two connection node halves (11, 12) comprise grooves (10) wherein the pins (9) are introduceable and that the connection node halves (11, 12) are screwable to each other and therefor the pins (9) are clamped blocking secured into the connection node (1).

7. Climbing structure according to one of the claims 1 to 6, **characterized in that** a special pin (13) is further screwable by means of a longer special screw (14) to the connection node (1).

8. Climbing structure for children according to claim 7, **characterized in that** the special pin (13) can be fixed also to the bar (6) by means of the special screw (14).

9. Climbing structure according to one of the claims 4 to 8, **characterized in that** the bars (6) connected to each other comprise at least on one end a pin (9) which can be clamped blocking secured into the groove (10) of the connection node halves (11, 12) connected to each other.

10. Climbing structure according to one of the claims 1 to 9, **characterized in** the the connection nodes (1), coupling halves (4, 5), the tubes (3), the bars (6) and the pins (9) and the special pins (13) are partially made of plastics.

## Revendications

1. Structure pour grimper comportant des barres et des noeuds de raccordement, les barres étant formées en tant que tubes (3) et les noeuds de raccordement étant pourvus de tenons (9), **caractérisé en ce que** les tenons (9) sont en contre-dépouille et **en ce que** les tubes (3) sont aussi pourvus sur les extrémités de tenons (9) contre-dépouillés, lesquels tenons (9) sont reliés entre eux par sécurité de blocage au moyen de dispositifs d'accouplement (2).

2. Structure pour grimper selon la revendication 1, **caractérisé en ce que** le dispositif d'accouplement (2) est constitué de moitiés de dispositif d'accouplement (4) qui sont susceptibles d'être liées entre elles au moyen de vis de raccordement (7) et d'écrous (8).

3. Structure pour grimper selon les revendications 1 et 2, **caractérisé en ce que** les deux moitiés de dispositif d'accouplement (4, 5) comportent des deux côtés une rainure circonférentielle (10) qui relie par sécurité de blocage les tenons (9) du noeud de raccordement (1) et du tube (3).

4. Structure pour grimper comportant des barres et des noeuds de raccordement, **caractérisé en ce que** les barres (6) sont séparées en deux en direction longitudinale et présentent chaque fois sur les extrémités une réception en forme de rainures (10) pour un tenon (9) contre-dépouillé, qu'elles reçoivent par sécurité de blocage, et **en ce qu'**aussi les noeuds de raccordement (1) sont séparés en deux et reçoivent des tenons contre-dépouillés.

5. Structure pour grimper selon la revendication 4, **caractérisé en ce que** les moitiés (11, 12) des barres (6) sont susceptibles d'être reliées entre elles aux moyens de vis (7) et des écrous et entourent ainsi en même temps par sécurité de blocage les tenons (9) contre-dépouillés des noeuds de raccordements (1)

6. Structure pour grimper selon une des revendications 1 à 5, **caractérisé en ce que** le noeud de raccordement (1) constitué de deux moitiés de noeud de raccordement (11, 12) comporte des rainure (10) dans lesquelles on peut loger des tenons (9) et **en ce que** les moitiés de noeud de raccordement (11, 12) sont susceptibles d'être vissées entre elles et ainsi les tenons (9) sont serrés par sécurité de blocage dans le noeud de raccordement (1).

7. Structure pour grimper selon une des revendications 1 à 6, **caractérisé en ce qu'**un tenon spécifique (13) est susceptible d'être vissé en plus avec le noeud de raccordement (1) au moyen d'une vis spécifique (14) plus longue.

8. Structure pour grimper pour enfants selon la revendication 7, **caractérisé en ce que** le tenon spécifique (13) est susceptible d'être fixé également sur la barre (6) au moyen de la vis spécifique (14).

9. Structure pour grimper selon une des revendications 4 à 8, **caractérisé en ce que** les barres (6), reliées entre elles, comportent au moins sur une extrémité un tenon (9) qui est susceptible d'être serré par sécurité de blocage dans la rainure (10) des moitiés de noeud de raccordement (11, 12) reliées entre elles.

10. Structure pour grimper selon une des revendications 1 à 9, **caractérisé en ce que** les noeuds de raccordement (1), les moitiés de dispositif d'accouplement (4, 5), les tubes (3), les barres (6) et les tenons (9) et les tenons spécifiques (13) sont partiellement en matière plastique.
